(19)

Europäisches Patentamt
European Patent Office
Office européen des brevets

(11) **EP 3 416 364 A1**

(12) **EUROPEAN PATENT APPLICATION**

(43) Date of publication:
**19.12.2018 Bulletin 2018/51**

(51) Int Cl.:
***H04N 1/60*** (2006.01)

(21) Application number: **17305722.5**

(22) Date of filing: **14.06.2017**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(71) Applicant: **Thomson Licensing**
**92130 Issy-les-Moulineaux (FR)**

(72) Inventors:
• **STAUDER, Jurgen**
  **35576 CESSON-SÉVIGNÉ (FR)**
• **LE ROUX, Mikel**
  **35576 CESSON-SÉVIGNÉ (FR)**
• **MORVAN, Patrick**
  **35576 CESSON-SÉVIGNÉ (FR)**

(74) Representative: **Vidon Brevets & Stratégie**
**16B, rue de Jouanet**
**BP 90333**
**35703 Rennes Cedex 7 (FR)**

(54) **COLOR CHARACTERIZATION OF A DISPLAY SYSTEM HAVING A DYNAMIC DISPLAY CONTROL UNIT**

(57)    In a color characterization process defining a color model modelling the display system, it is basically proposed to set aside all n-tuples of input color coordinates that induce a reduction of a color parameter of the reproduced colors. This process notably applies to display systems having Automatic Brightness Limiters or Night Viewing Adapters.

Fig.1

EP 3 416 364 A1

## Description

Technical Field

The invention relates to the color characterization of a display system having a dynamic display control and a color processing unit for the reduction of a color parameter such as luminance or blue component, notably a display system configured to save electric power consumption or to improve night viewing of images.

Background Art

Many electronic devices that rely on battery for electric power, as for instance smartphones, tablets, Head Mounted Devices (HMD) and even cameras have a display panel. Depending on the technology of the display panel, they often apply dynamic display control in order to reduce electric power consumption and save battery resources. Dynamic luminance control includes generally well-known Average Pixel Level (APL) and Automatic Brightness Limiter (ABL) methods.

For other electronic devices like TV sets or monitors that have larger display panels, there is also a need to reduce electric power consumption, even if they are not powered by a battery but through an electric supply network. That is why such other electronic devices may also apply dynamic display control.

When such a dynamic display control is activated during the display of an image, power consumption is limited to a maximum power threshold allocated to the display panel. It means this dynamic display control can detect images that require an electric power above this maximum power for their display and trigger a color or a tone transformation of the detected images that is adapted to limit the power required for their display. Such a color or tone transformation may notably correspond to highlights compression, i.e. a tone mapping of pixels having the highest luminances. Such a tone mapping may be spatially varying in an image. For example, a highlight region at the left in an image is tone mapped, while a shadow region at the right side of the image is not modified. Over the whole range of luminances of the image to display, highlights compression generates a tone mapping that is therefore non linear, and the whole display system incorporating a dynamic display control unit, a color processing unit configured for applying such a tone mapping when triggered by the dynamic display control unit, and the display panel itself is considered as a non linear display system. Moreover, such a whole display system is usually image-dependent since the required power limitation to yield the maximum allocated power depends on the luminance of a given image.

There are other situations in which a display system incorporates a dynamic display control unit and a color processing unit that can be triggered by the dynamic display control unit, for instance a night viewing display system. In such a display system, the color processing unit is configured to reduce the blue component of images when required by the dynamic display control unit.

The electric power required to display an image or the night viewing conditions of an image correspond more generally to a so-called display **condition parameter.**

The reduction of luminance values brought by the above tone mapping of images or the above reduction of blue component of images correspond more generally to a reduction of a so-called **color parameter** of colors of these images. Such a color parameter can also be related to saturation since saturated colors require large luminances in at least one color channel.

A problem arises for the color calibration of such a display system, because such a reduction of a color parameter of colors of images prevents usual color calibration methods from being applicable.

Color calibration of a display device requires usually color measurement of colors displayed by this display device configured by a given set of settings, color characterization of this display device for this given set of settings, and finally color calibration of this display device.

Color measurement of a display device comprises generally controlling this display device with a set of n-tuples of input color coordinates (n≥1), for example R,G,B triplets when the display is trichromatic (n=3), and, for each n-tuple of input color coordinates, measuring a corresponding triplet of output color coordinates representing the color reproduced by this display device in a device-independent color space, for instance the CIE XYZ. These output color coordinates are then device-independent color coordinates X,Y,Z.

Color characterization of a display device comprises generally defining a display model such that any n-tuple of input color coordinates of this set is transformed by this model - within the precision of the model - into the corresponding triplet of output color coordinates that - within the precision of measurement - has been measured for this display device. Such a display model is generally not image dependent and is then generally not able to model any image-dependent behavior of the display. Additionally, such a display model is generally not spatially variant and cannot generally model any spatially variant behavior of the display. However, generally a display device does not depend on the image and does not change the way of color reproduction dependent on the location in an image. In the context of the invention, color characterization includes tone characterization.

Display calibration of a display device includes processing input color coordinates - using its display model - such that the color which is reproduced by this display device follows a given reference model instead of following the display model, when this display device is controlled by these processed input color coordinates.

In case of a display system with a dynamic display control unit and a color or tone transformation unit or a color processing unit as described above, some of the colors that are reproduced during the color measurement step of a calibration process might have a reduced color parameter, for instance a reduced luminance or a reduced blue component as described above, resulting in measured X,Y,Z color coordinates being changed. Therefore, processing color characterization of such a display device using such color measurements will provide a display model that will not describe properly the color reproduction of this display device and any subsequent display calibration will be erroneous.

Document US 2010/0201667 discloses a method requiring the measurement of APL during display characterization and the measurement of APL of video content for the adaptation/calibration of this content. The disadvantage of this method is that APL has to be measured.

Summary of invention

An object of the invention is to propose a specific color characterization process for a display system comprising not only a display panel, but also a dynamic display control unit and a color processing unit such as those described above.

For this purpose, it is basically proposed, in a color characterization process defining a color model modelling such a display system, to set aside all n-tuples of input color coordinates that induce a reduction of a color parameter of reproduced colors (such as highlights compression for the purpose of saving electric power or such as blue component reduction for the purpose of improving night viewing). More specifically, it is proposed to start refining a display model from input n-tuples representing colors that do not need to be color or tone processed by the color processing unit before being reproduced, and to stop refining this already-refined display model for n-tuples representing colors that need to be color or tone processed by the color processing unit before being reproduced.

For this purpose, a subject of the invention is notably a method of color characterization of a display system, based on an input set of input n-tuples of input color coordinates than can be used to control said display system and that are ordered according an ordering criteria, with $n \geq 1$, wherein said method comprises:

after at least one previous iteration in which at least one color component of a color reproduced by said display system when it is controlled by an input n-tuple of said input set is measured and in which a display model has been refined such that the application of the refined display model to said input n-tuple outputs approximatively the at least one color component of the measured color, at least one following iteration comprising:

- measuring the at least one color component of a color reproduced by said display system when it is controlled by an input n-tuple following the input n-tuple of the previous iteration in the order of input n-tuples of said input set,
- computing a color difference between the measured color and the color outputted by the display model refined at the previous iteration when inputting said input n-tuple of this following iteration,
- if said computed color difference is above a color difference threshold, then retaining the display model refined at the previous iteration for the color characterization of said display system,

otherwise further refining the display model of the previous iteration such that the application of the further-refined display model to said input n-tuple of this following iteration outputs approximatively the at least one color component of the measured color and reiterating another following iteration.

The expression "color characterization" includes tone characterization. Therefore, a "color difference" may be a tone difference. More generally, the word "color" includes "tone". n may be equal to 1, but is preferably equal or superior to 3. The display system may be a black & white display system, but is preferably a color display system.

Preferably, the display system incorporates a dynamic display control unit and a color processing unit. The color processing unit may be a tone processing unit.

Preferably, the color processing unit is adapted to reduce a color parameter of colors of images to display.

Preferably, the ordering criteria of the input n-tuples is based on increasing values of said color parameter of these input n-tuples.

Preferably, the dynamic display control unit is adapted to detect a display condition parameter of images to display.

Preferably, the display system is configured to trigger a reduction of the color parameter of images by the color processing unit when the dynamic display control unit detects a display condition parameter of images to display that is above a **display condition threshold.**

The display condition threshold is for instance an electric power threshold. In such a situation, the color parameter is preferably tone or luminance, the color processing unit is adapted to reduce tone or luminance of some colors of some images to display, and the ordering criteria of the input n-tuples is based on increasing values of tone or luminance.

The display condition threshold is for instance a night viewing threshold. In such a situation, the color parameter is preferably a blue component, the color processing unit is adapted to reduce blue component of some colors of some images to display, and the ordering criteria of the input n-tuples is based on increasing values of blue component.

A subject of the invention is also a color characterization unit comprising at least one processor configured to implement the color characterization of a display system based on an input set of input n-tuples of input color coordinates than can be used to control said display system and that are ordered according an ordering criteria, with n ≥ 1, wherein said color characterization comprises :

after at least one previous iteration in which a measurement of at least one color component of a color reproduced by said display system when it is controlled by an input n-tuple of said input set is received and in which a display model has been refined such that the application of the refined display model to said input n-tuple outputs approximatively the at least one color component of the measured color, at least one following iteration comprising:

- receiving a measurement of the at least one color component of a color reproduced by said display system when it is controlled by an input n-tuple following the input n-tuple of the previous iteration in the order of input n-tuples of said input set,
- computing a color difference between the measured color and the color outputted by the display model refined at the previous iteration when inputting said input n-tuple of this following iteration,
- if said computed color difference is above a color difference threshold, then retaining the display model refined at the previous iteration for the color characterization of said display system,

otherwise further refining the display model of the previous iteration such that the application of the further-refined display model to said input n-tuple of this following iteration outputs approximatively the at least one color component of the measured color and reiterating another following iteration.

A subject of the invention is also a color characterization system comprising a color measurement device and a color characterization unit comprising at least one processor, said device and said processor being both configured to implement the color characterization method of any one of claims 7 to 5 for the color characterization of a display system.

A subject of the invention is also an electronic device comprising such a color characterization system, for the color characterization of a display system.

Preferably, this electronic device comprises a color sensor, wherein said color sensor is included in said color measurement device. Such a color sensor may be a tone sensor. Such a color sensor can notably be included in a camera of the electronic device.

Preferably, this electronic device comprises a display system which is said display system to color characterize. It means that the electronic device can be used to color characterize its own display system. For such a color characterization, colors that are reproduced by the display system can be advantageously redirected through a mirror towards a camera of this electronic device for measurements of the at least one color component.

Preferably, this electronic device is selected in the group formed by smartphones, tablets, head-mounted devices and cameras.

A subject of the invention is also a computer program product comprising program code instructions to execute the steps of the above method of color characterization, when this program is executed by a processor.

Brief description of drawings

The invention will be more clearly understood on reading the description which follows, given by way of non-limiting example and with reference to the appended figures in which:

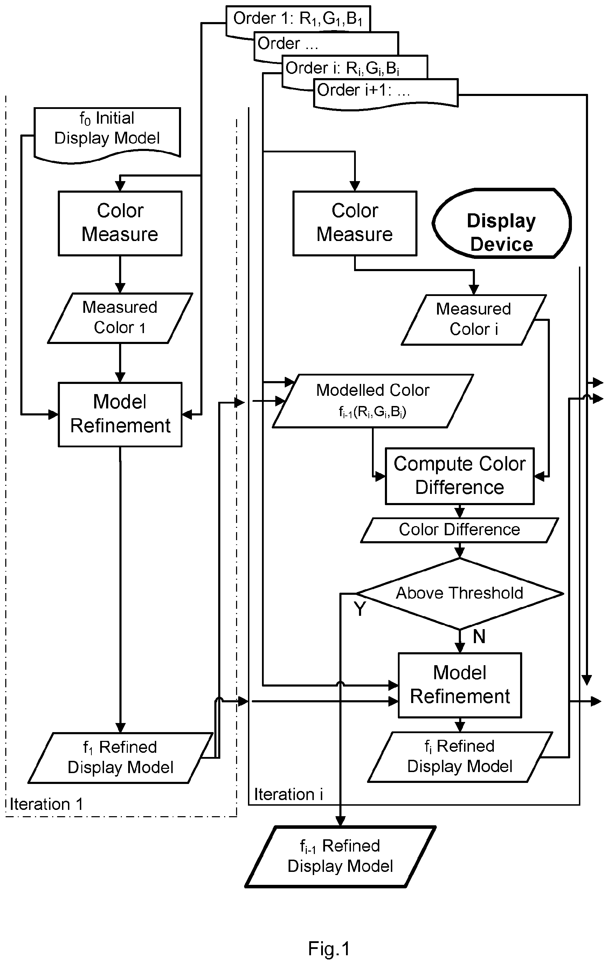

- Figure 1 is a flowchart illustrating a main embodiment of the color characterization of a display system.

Description of embodiments

A main embodiment of color characterization of a display system will now be described below.

The display system comprises preferably a display panel, a dynamic display control unit and a color processing unit.

The display system can be specifically designed to reduce electric power consumption or designed for night viewing as described above.

The dynamic display control unit is for instance adapted in a manner known per se to detect power consumption of images to display, or color perception of images under night conditions. More generally, the dynamic display control unit is adapted to detect a display condition parameter of images to display.

The color processing unit is for instance adapted in a manner known per se to apply highlights compression or blue component reduction of images to be displayed as described above. More generally, the color processing unit is preferably configured to reduce a color parameter of colors of images to be displayed. Instead of reducing the tone/luminance or of reducing the blue component as described above, other color parameters can be reduced as for instance the color saturation.

The dynamic display control unit is preferably further configured in a manner known per se to trigger a reduction of the color parameter of colors of images by the color processing unit when the dynamic display control unit detects a display condition parameter of images to display that is above a display condition threshold. This display condition threshold can be for instance a maximum power threshold or a night condition index.

Any other image-dependent display systems can be characterized using this method.

In the below embodiment, this display system is trichromatic and configured to be controlled by input triplets of R,G,B color coordinates representing colors to display in the RGB device-dependent color space of this display system. Each color coordinates is coded for instance on 8 bits, from 0 to 255. The method can be also applied to any display system configured to be controlled by input n-tuples of n color coordinates representing colors to display in the device-dependent color space of this display system, whatever n is equal to 3 for trichromatic display systems, or superior to 3, or even equal to 1 for black and white display systems. Preferably, the display system is a color display system and $n \geq 3$.

The color characterization method is notably implemented using a **color characterization unit.** The functions of the various elements of color characterization steps of the method shown in figure 1 may be provided through the use of dedicated hardware as well as hardware capable of executing software in association with appropriate software.

It is to be understood that the invention may be implemented in various forms of hardware, software, firmware, special purpose processors, or combinations thereof that are advantageously incorporated in the **color** characterization unit. The term "processor" should not be construed to refer exclusively to hardware capable of executing software, and may implicitly include, without limitation, digital signal processor ("DSP") hardware, read-only memory ("ROM") for storing software, random access memory ("RAM"), and non-volatile storage. The invention may be notably implemented as a combination of hardware and software. Moreover, the software may be implemented as an application program tangibly embodied on a program storage unit which is part of the color characterization unit. Such a software can take the form of a plug-in to be integrated to another software. The application program may be uploaded to, and executed by, the color characterization unit comprising any suitable architecture.

Preferably, the color characterization unit is implemented on a computer platform having hardware such as one or more central processing units ("CPU") or processors, a random-access memory ("RAM"), and input/output ("I/O") interfaces. The computer platform may also include an operating system and microinstruction code. The various processes and functions described herein may be either part of the microinstruction code or part of the application program, or any combination thereof, which may be executed by a CPU. In addition, various other peripheral units may be connected to the computer platform.

A color measurement device configured to measure at least one color component among the different color components of the triplets is also used to implement the color characterization method which is described below. Globally, a **color characterization sys-**tem comprising the color characterization unit and the color measurement device is used to implement the color characterization method which is described below.

Preferably, the color measurement device is connected to the color characterization unit, such that this color characterization unit can receive color measurement data from the color measurement device.

Preferably, the display system is connected to the color characterization unit, such that this color characterization unit can send input n-tuples to control the display system during its color characterization.

The display system to color characterize can be notably part of an electronic device powered by a battery, such as a camera, a smartphone, a tablet or a head-mounted display, or even part of an electronic device powered by any other electric supply, including electronic device with large display panels such as TV set or monitor.

Any color or tone or light sensor belonging to an electronic device incorporating the display system can advantageously be used in connection with any color processing unit incorporated in this electronic device as a color measurement device to implement the color characterization method. The color characterization unit may also be advantageously incorporated in this electronic device.

All components of the **color characterization unit** are configured in a manner known per se to implement the different steps of the embodiments of the color characterization method described hereafter.

In order to implement this method, an input set of input triplets is needed than can be used to control the display system in order to reproduce colors. This input set is prepared in a usual manner known for the color characterization of display devices.

In order to implement this method, input triplets of the input set are ordered according to an ordering criteria. In a first example of a dynamic display control unit configured for saving electric power consumption and of a color processing unit configured for highlights reduction, this ordering criteria is based on increasing luminance values of these input triplets. In this example, luminance $E'_Y = 0.2126\, E'_R + 0.7152\, E'_G + 0.0722\, E'_B$ may first be calculated according to ITU-R BT.709 for each triplet of the input set, and then the input triplets of the input set are ordered of increasing luminance values $E'_Y$. In a second non-limiting example of a dynamic display control unit configured for improving night viewing and of a color processing unit configured for blue component reduction, this ordering criteria is based on increasing blue component values of these input triplets. More generally, the ordering criteria is then preferably based on increasing values of a color parameter that can be reduced by the color processing unit.

This order of input triplets within the input set will determine the order of the different iterations of the method as described below.

In order to implement this method, an initial dis-

play model $f_0$ is chosen to initiate the method. For instance, the following initial display model can be used:

$$Y = f_0(G) = G^{2.4}$$

where Y is the luminance of the color modeled by this initial display model with G as input, wherein G is one of the R,G,B color coordinates of an input triplet.

In a variant, the initial display model $f_0$ is computed using K>1 initial triplets of the input set. The initial display model can have M parameters to be determined with 1<M≤K such that K is equal or larger than M. For example, if the initial display model is a linear matrix having M=9 coefficients transforming R,G,B coordinates into X,Y,Z coordinates, at least K=9=M input triplets are used to determine the initial display model. In another example, if the initial display model is based on a linear matrix and an offset, there are M=12 parameters for 9 matrix coefficients and three X,Y,Z offset values and at least K=12 initial triplets are needed to compute the initial display model. In such obtaining of a linear model from measurements, according to well-known principles of linear algebra, the K initial triplets should be linearly independent in order to allow obtaining a linear model. In case of more complex models, for example quadratic or other non-linear models, according to well-known principles of optimization, it should be verified that the described minimization of a cost function is not ill-posed. If an ill-posed minimization is detected, weights may be changed, the number K of initial triplets may be increased, or the ordering of the input triplets may be slightly modified in the input set in order to obtain a well-posed minimization. In a variant, initial triplets that are used to generate an iniatial model, may be deleted from the input set before proceeding.

Then, in order to implement the color characterization of the display system, a first iteration is then processed as follows.

A first input triplet $R_1,G_1,B_1$ of color coordinates is selected in the input set, preferably the first input triplet in the ordering of the input set, or the first input triplet ordered after the initial triplets if the initial display model have been computed as described above.

Then, this first input triplet $R_1,G_1,B_1$ is used to control the display system. The display system then reproduces a color.

Using then the color measurement device, this reproduced color is measured and at least one color component of an output triplet $X_1,Y_1,Z_1$ of color coordinates is obtained that represents the reproduced color in the CIE XYZ color space. Any other device-independent color space can be used to represent the reproduced color.

Using then the color characterization unit, the initial display model $f_0$ is refined into a a refined display model $f_1$, such that the application of this refined display model $f_1$ to the first input triplet $R_1,G_1,B_1$ outputs approx-

imatively the at least one color component of the output triplet $X_1,Y_1,Z_1$, i.e. the measured color above. A refinement method will be detailed below, but any known refinement method can be used instead.

A second iteration is then launched as follows, which will be denoted by i as applying to any other iteration following a previous iteration denoted i-1. Here, for this second iteration, i= 2, and the first iteration above is denoted i-1 =1.

An input triplet $R_i,G_i,B_i$ that follows the input triplet $R_{i-1},G_{i-1},B_{i-1}$ of the previous iteration i-1 in the ordering of the input set is selected. When the first input triplet is the first input triplet in the ordering of the input set (i.e. when $R_{i-1},G_{i-1},B_{i-1} = R_1,G_1,B_1$), then the input triplet $R_i$, $G_i,B_i$ which is selected for the second iteration will preferably be the second one in this ordering.

Then, this input triplet $R_i,G_i,B_i$ of the i iteration is used to control the display system. The display system then reproduces another color.

Using then again the color measurement device, this new reproduced color is measured and the at least one color component of an output triplet $X_i,Y_i,Z_i$ of color coordinates is obtained that represents the new reproduced color in the CIE XYZ color space.

Still using the color measurement device, a color difference $\Delta[(X_i, Y_i, Z_i), f_{i-1}(R_i, G_i, B_i)]$ is computed between this new measured color represented by the at least one color component of the output triplet $X_i, Y_i, Z_i$ and the at least one color component of the color $f_{i-1}(R_i, G_i, B_i)$ outputted by the display model $f_{i-1}$ refined at the previous iteration i-1=1 when inputting said selected input triplet $R_i,G_i,B_i$. This color $f_{i-1}(R_i, G_i, B_i)$ is a modelled color obtained through the previously refined display model $f_{i-1}$.

If the computed color difference $\Delta[(X_i,Y_i,Z_i), f_{i-1}(R_i,G_i,B_i)]$ is above a **color difference threshold,** then the previously refined model $f_{i-1}$ is considered as characterizing the display system.

Otherwise, still using the color characterization unit, the previous display model $f_{i-1}$ is again refined into a new refined display model $f_i$ such that the application of this new refined display model $f_i$ to the following input triplet $R_i,G_i,B_i$ outputs approximatively the at least one color component of the output triplet $X_i,Y_i,Z_i$, i.e. the new measured color above. The same refinement method as above is used, for instance a refinement method based on a minimization of a cost function

$$\sum_{j=1}^{i} V_j \left( \Delta[(X_j, Y_j, Z_j), f_{j-1}(R_j, G_j, B_j)] \right)^2$$

where Vj is a weight. Such a weight might for example inversibly depend on measurement noise such that low noise measurements have more influence on the result.

When the color processing unit is adapted to reduce a color parameter of images to display, the ordering criteria of the input triplets is preferably based on increasing values of this color parameter of these input triplets. When the color parameter is luminance, the ordering criteria of the input triplets is based on increasing values of luminance of these input triplets. When the color parameter is the blue component, the ordering criteria of the input triplets is based on increasing values of blue components of these input triplets.

In order to avoid unwanted drift of the refined models $f_i$ over several iterations, either the color difference threshold is prefererably chosen sufficiently small, for example just above noise level, or the difference between two succeeding, ordered input triplets is preferably sufficiently large to ensure that a potential reduction of the color parameter realized by the color processing unit is larger than the color difference threshold.

When the display condition parameter that the dynamic display control unit can detect is the electric power needed to display images to display, the increase of luminance values from iteration to iteration will require more and more electric power to reproduce colors up to a point at which the color processing unit will reduce luminance of colors to reproduce such that the tone difference between a reproduced color and a modeled color will be above the color/tone difference threshold, ending then the iterations and delivering the final color characterization of the display system.

The final color characterization of the display system that is obtained does not take into account colors having color parameter values that are significantly reduced by the color processing unit. When the color parameter is luminance, the final color characterization of the display system that is obtained does not take into account colors having luminance values that are significantly reduced by the color processing unit. This final color characterization advantageously does not require the measurement of an average power limitation as in the method described in the document US 2010/0201667.

The present invention as claimed includes variations from the particular examples and preferred embodiments described herein, as will be apparent to one of skill in the art.

While some of the embodiments and variants above may be described and claimed separately, it is understood that their various features described and claimed herein may be used in combination.

## Claims

1. Method of color characterization of a display system, based on an input set of input n-tuples of input color coordinates than can be used to control said display system and that are ordered according an ordering criteria, with n ≥ 1, wherein said method comprises:

     after at least one previous iteration in which at least one color component of a color reproduced by said display system when it is controlled by an input n-tuple of said input set is measured and in which a display model has been refined such that the application of the refined display model to said input n-tuple outputs approximatively the at least one color component of the measured color,
at least one following iteration comprising:

     - measuring the at least one color component of a color reproduced by said display system when it is controlled by an input n-tuple following the input n-tuple of the previous iteration in the order of input n-tuples of said input set,
     - computing a color difference between the measured color and the color outputted by the display model refined at the previous iteration when inputting said input n-tuple of this following iteration,
     - if said computed color difference is above a color difference threshold, then retaining the display model refined at the previous iteration for the color characterization of said display system,

     otherwise further refining the display model of the previous iteration such that the application of the further-refined display model to said input n-tuple of this following iteration outputs approximatively the at least one color component of the measured color and reiterating another following iteration.

2. Method of color characterization according to claim 1, wherein said display system incorporates a dynamic display control unit and a color processing unit.

3. Method of color characterization according to claim 2, wherein said color processing unit is adapted to reduce a color parameter of colors of images to display, and wherein **said ordering criteria** of the input n-tuples is based on increasing values of said color parameter of these input n-tuples.

4. Method of color characterization according to claim 3, wherein said dynamic display control unit is adapted to detect a display condition parameter of images to display, and wherein said display system is configured to trigger a reduction of the color parameter of images by the color processing unit when the dynamic display control unit detects a display condition parameter of images to display that is above a **display condition threshold.**

5. Method of color characterization according to claim 4, wherein said display condition parameter is electric power needed to display images and wherein said color parameter is luminance of colors of these images.

6. Color characterization unit comprising at least one processor configured to implement the color characterization of a display system based on an input set of input n-tuples of input color coordinates than can be used to control said display system and that are ordered according an ordering criteria, with n ≥ 1, wherein said color characterization comprises:

after at least one previous iteration in which a measurement of at least one color component of a color reproduced by said display system when it is controlled by an input n-tuple of said input set is received and in which a display model has been refined such that the application of the refined display model to said input n-tuple outputs approximatively the at least one color component of the measured color, at least one following iteration comprising:

- receiving a measurement of the at least one color component of a color reproduced by said display system when it is controlled by an input n-tuple following the input n-tuple of the previous iteration in the order of input n-tuples of said input set,
- computing a color difference between the measured color and the color outputted by the display model refined at the previous iteration when inputting said input n-tuple of this following iteration,
- if said computed color difference is above a color difference threshold, then retaining the display model refined at the previous iteration for the color characterization of said display system,

otherwise further refining the display model of the previous iteration such that the application of the further-refined display model to said input n-tuple of this following iteration outputs approximatively the at least one color component of the measured color and reiterating another following iteration.

7. Color characterization system comprising a color measurement device and a color characterization unit comprising at least one processor, said device and said processor being both configured to implement the color characterization method of any one of claims 1 to 5 for the color characterization of a display system.

8. Electronic device comprising a color characterization system according to claim 7, for the color characterization of a display system.

9. Electronic device according to claim 8 comprising a color sensor, wherein said color sensor is included in said color measurement device.

10. Electronic device according to claim 8 comprising a display system which is said display system to color characterize.

11. Electronic device according to any one of claims 8 to 10, selected in the group formed by smartphones, tablets, head-mounted devices and cameras.

12. A computer program product comprising program code instructions to execute the steps of the method according to any one of the claims 1 to 5, when this program is executed by a processor.

Order 1: $R_1,G_1,B_1$

Order ...

Order i: $R_i,G_i,B_i$

Order i+1: ...

$f_0$ Initial Display Model

Color Measure

Color Measure

Display Device

Measured Color 1

Measured Color i

Model Refinement

Modelled Color $f_{i-1}(R_i,G_i,B_i)$

Compute Color Difference

Color Difference

Above Threshold

Y

N

Model Refinement

$f_1$ Refined Display Model

$f_i$ Refined Display Model

Iteration 1

Iteration i

$f_{i-1}$ Refined Display Model

Fig.1

Europäisches
Patentamt

European
Patent Office

Office européen
des brevets

# EUROPEAN SEARCH REPORT

**Application Number**

EP 17 30 5722

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2013/226495 A1 (MARCU GABRIEL [US] ET AL) 29 August 2013 (2013-08-29) * paragraph [0031] - paragraph [0034]; figures 1, 3 * * paragraph [0075] - paragraph [0102]; figures 6-9 * | 1-12 | INV. H04N1/60 |
| A | US 2010/238301 A1 (KOJIMA TAKAYOSHI [JP]) 23 September 2010 (2010-09-23) * paragraph [0048] - paragraph [0069]; figure 3 * | 1-12 | |
| A | US 2014/139571 A1 (ALBRECHT MARC [US] ET AL) 22 May 2014 (2014-05-22) * paragraph [0083] - paragraph [0090]; figures 10-12 * * paragraph [0121] - paragraph [0126]; figure 13 * | 1-12 | |

**TECHNICAL FIELDS SEARCHED (IPC)**

H04N

The present search report has been drawn up for all claims

| Place of search | Date of completion of the search | Examiner |
|---|---|---|
| Munich | 13 December 2017 | Bakstein, Hynek |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 17 30 5722

This annex lists the patent family members relating to the patent documents cited in the above-mentioned European search report.
The members are as contained in the European Patent Office EDP file on
The European Patent Office is in no way liable for these particulars which are merely given for the purpose of information.

13-12-2017

| Patent document cited in search report | | Publication date | Patent family member(s) | | Publication date |
|---|---|---|---|---|---|
| US 2013226495 | A1 | 29-08-2013 | CN<br>JP<br>KR<br>TW<br>US | 103293720 A<br>2013178519 A<br>20130098919 A<br>201342355 A<br>2013226495 A1 | 11-09-2013<br>09-09-2013<br>05-09-2013<br>16-10-2013<br>29-08-2013 |
| US 2010238301 | A1 | 23-09-2010 | JP<br>US | 2010226370 A<br>2010238301 A1 | 07-10-2010<br>23-09-2010 |
| US 2014139571 | A1 | 22-05-2014 | NONE | | |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20100201667 A